# EUROPEAN PATENT SPECIFICATION

(11) **EP 3 644 464 B1**
(45) Date of publication and mention of the grant of the patent: **30.11.2022**
(21) Application number: 19204017.8
(22) Date of filing: 18.10.2019
(51) Int. Cl.: H02G 3/00, A47B 57/40, F16L 3/24, H02G 3/30, H02G 3/02, A47B 57/42, F16L 3/22

(54) **CARRIAGE SYSTEM FOR CABLE LADDERS, CABLE RACEWAYS AND CABLE TRAYS**
TRÄGERSYSTEM FÜR KABELLEITERN, KABELKANÄLE UND KABELRINNEN
SYSTÈME DE SUPPORT POUR ÉCHELLES À CÂBLES, CHEMINS DE CÂBLES ET GOULOTTES DE CÂBLES

(30) Priority: 25.10.2018 SE 1851323
(43) Date of publication of application: 29.04.2020
(73) Proprietor: Aktiebolaget Wibe, 792 01 Mora (SE)
(72) Inventor: Öjerstav, Jan, 792 34 MORA (SE); Qvicker, Jimmy, 796 31 ÄLVDALEN (SE); Nanjundaiah, Mahesh, 792 34 MORA (SE); Melun, Jeremy, 69720 ST BONNET DE MURE (FR)
(74) Representative: Groth & Co. KB

(56) References cited:
- EP-A1- 1 770 840
- EP-B1- 1 770 840
- WO-A2-2010/146163
- FR-A1- 3 029 022
- FR-A1- 3 048 562

## Description

### Technical application

The present invention relates to a carriage system for cable ladders, cable raceways and cable trays. In particular, the invention relates firstly to how such a carriage system is assembled and secondly, how the cable ladders, cable raceways and cable trays are connected to the carriage system.

### Background to the invention

The assembly of traditional carriage systems and the application of cable ladders, cable raceways and cable trays includes interconnecting a number of components of varying appearance and function. These interconnections have been executed using screw joints, of which there is a significant number present in an installation of a carriage system.

Each screw joint takes a long time to assemble and results in the assemblers having to use extra components in the form of screws, nuts and also tools.

Through patent specification EP 1736075, such a carriage system is a known prior art for which assembly can be done primarily without conventional screw joints. The specification shows that the components of the system can be locked to each other through a component fitted with a lock tab, which from a first position is bent to a second position to lock the components to each other. The lock tab is provided with a hole into which a tool is introduced in order to perform this bending of the tab. Thus, an assembler needs to perform a time-consuming hand grip with a tool for each of the respective objects in the system.

Other carriage systems for cables are for instance illustrated in the documents WO 2010/146163, FR 3 048 562, FR 3 029 022 and EP 1 770 840 A1.

### Purpose of the invention

The purpose of the invention is to create a new type of carriage system that is assembled with a minimum of traditional screw joints and a minimum of tools.

Furthermore, the purpose is for the carriage system to include assembly devices that mean that different parts of the system can be connected to each other by using one and the same assembly procedure.

In addition, the purpose is also to be able to assemble a carriage system in significantly less time and with fewer included loose parts than was the case with prior art carriage systems.

### Summary of the invention

Through the present invention as set out in the independent patent claim, the purposes listed above are fulfilled, whereby the disadvantages mentioned have been eliminated. Suitable embodiments of the invention are listed in the dependent patent claims.

The invention refers to a carriage system for cable ladders, cable raceways or cable trays. The system includes a first vertical object in the form of a pivot runner/anchor runner and a first horizontal object in the form of a bracket to which a cable ladder, a cable raceway or a cable tray can be connected and received. Vertical objects and horizontal objects indicate that the object principally has an extension or increased extension into the vertical and horizontal joints of the system. The first vertical object is provided with a number of holes that form a hole pattern, which includes at least one slot and a locking device embodied as a hole or as a raised edge. On the first vertical object, the hole pattern is serially repeated along the entire object. Furthermore, the first horizontal object at either end has been fitted with a hook-shaped projection, which in a first position is inserted into said slot. The hook shape of the projection can be embodied at the level of the projection or as a curvature bending away from the level of the projection. The object is slidable into the slot to a lock position in which a spring lock tab on the first horizontal object is designed to snap/click into or over the locking device on the first vertical object, to thereby lock each object to each other. The hole pattern is provided with longitudinally oriented slots and a locking device as a square hole that passes through, the hole pattern of the runner being designed with slots, which are L-shaped and in pairs arranged on each side of the square hole in a symmetrical configuration facing each other whereby a serial pattern of the hole pattern consists of a pair of L-shaped slots and a locking device arranged symmetrically around the centreline of the runner, and at one end said first horizontal object or said second vertical object is provided with a corresponding L-shaped projection, which in a first position is insertable into the slots, which are L-shaped holes, and parallel to the vertical object can be dislocated to the locked position, and said first horizontal object is provided with a spring lock tab, designed to snap/click into/over the locking device in the first vertical object in the locked position.

The system may also comprise a second horizontal object, for example, in the form of a yoke that is connected to a pivot part in its centre. A second vertical object may also be included in the system, which is an object that is executed, for example, in the form of an adapter, in order to provide a connection for one of the yokes to a vertical anchor runner or pivot runner or in the form of a ceiling bracket for connection of an anchor runner or pivot runner to a ceiling using a screw joint. The second vertical object may at its one end or at its side be provided with at least one hook-shaped projection, which is insertable into the slot, the second vertical object may further be provided with a spring lock tab designed to snap/click into/over said locking devices in the first vertical object.

In an embodiment of the second vertical object as an adapter, its end has an additional hook-shaped projection that in a first position is inserted into a corresponding slot in the hole pattern of the second horizontal object as a yoke, with which the second vertical object is insertable in parallel in relation to the second horizontal object into the lock position, and said second vertical object is provided with a spring lock tab, designed to snap/click into a corresponding locking device in the second horizontal object in the lock position. Thus, this adapter is provided with a side projection at one end and with a longitudinal projection at the other end. The two groups of projections are designed to fit the same hole pattern.

In one embodiment of the invention, said second vertical object is designed with additional projections and the corresponding spring lock tab plate for assembling the second horizontal object in its corresponding hole pattern to the other end of said second vertical object.

In one embodiment of the invention, said second horizontal objects comprises a yoke for a cable ladder, cable raceway or cable tray.

In one embodiment of the invention, the hole pattern of the second horizontal object is located at the centre between its ends.

In one embodiment of the invention, the angle between a vertical object and a horizontal object is 90°. When connecting two vertical objects to each other, these will be parallel to each other.

In one embodiment of the invention, said first or second horizontal object is equipped with at least one angular recess provided with a vertical insertion column connected to a horizontal dislocation column, wherein the dislocation column is provided with a lock projection that is snapped over sections of a cable tray with the insertion of the cable trays into angular recesses.

In one embodiment of the invention, said first or second horizontal object is provided with a vertically directed lock slot in which a lock tab is positioned, so that the cable trays are locked securely into the lock slot through a snap mechanism.

In one embodiment of the invention, said second horizontal object is provided with at least one or several angular recesses, of which at least one has a vertical insertion column at the top of the second horizontal object and at least one has a vertical insertion column on the underside of the second horizontal object. Such embodiments mean that assembling a cable tray on to the carriage system can only be executed by an assembler, through the suspension of the cable trays on one side of the horizontal object and by them angling the other side up and insertion into the other side of the vertical insertion column, and then snapping it securely into the horizontal object.

In one embodiment of the invention, said other horizontal object is provided with essentially vertically oriented side wings, which are springy and directed slightly outwards into a resting position in order to render the connection of a cable ladder possible from underneath the second horizontal object through a snapping mechanism.

In one embodiment of the invention, on the top side of said first horizontal object, one end is provided with an essentially horizontally oriented side wing, and the other end of the top is provided with a flexible tab in order for the first horizontal object to connect a cable ladder from above through a snapping mechanism.

In one embodiment of the invention, said first or second horizontal object is provided with side holes, to which filiform snap studs are connected in order to connect a cable raceway through a snapping mechanism over side edges of the cable raceway.

In one embodiment of the invention, said second horizontal object is provided with multiple angular recesses, of which at least one has a vertical insertion column on the topside of the second horizontal object and at least one has a vertical insertion column on the underside of the second horizontal object. With such an embodiment, a cable tray can be assembled on a number of yokes by suspending the cable trays on the side of the yoke that has the insertion edges on the topside so that in the next step it is angled up towards the insertion columns located on the underside, and then moved into the dislocation columns so as to be clicked securely into them.

Said lock projections and said locking devices render the system mountable in the form of a click system that make it possible to quickly and easily connect different parts of the system to each other.

### Brief description of the drawings

The invention will now be described in more detail with reference to the accompanying drawings. The drawings show only principle sketches that are intended to facilitate the understanding of the invention. All figures are shown in perspective view.
- Figure 1: illustrates two objects connected to each other according to the invention.
- Figure 2: illustrates a magnification of a hole pattern from the first object as shown in Figure 1.
- Figure 3a: illustrates the second object as shown in Figure 1.
- Figure 3b: illustrates a detail magnification from Figure 3a.
- Figure 4: illustrates a detail magnification of the end of the object from Figure 3a.
- Figure 5: illustrates an alternative connection of two objects to each other according to the invention.
- Figure 6: illustrates the second object from Figure 5 in an alternative view.
- Figure 7a: illustrates an additional option connecting two objects to each other according to the invention.
- Figure 7b: illustrates yet another connection of two objects to each other according to the invention.
- Figure 8: illustrates an alternative object from Figure 7.
- Figure 9a: illustrates an alternative object to the object as shown in Figure 8.
- Figure 9b: illustrates the object from Figure 8 connected to a horizontal object.
- Figure 9c: illustrates an alternative horizontal object to Figure 9b.
- Figure 10: illustrates the object from Figure 8 connected to an alternative horizontal object.
- Figure 11: illustrates a first example of the carriage system according to the invention with two cable trays connected.
- Figure 12: illustrates a second example of the carriage system according to the invention with two cable ladders connected.
- Figure 13a: illustrates an alternative design of the second object as shown in Figure 1.
- Figure 13b: illustrates the second object as shown in Figure 13a in a side view.
- Figure 13c: illustrates the second object as shown in Figure 13a in a top view.
- Figure 14: illustrates a third example of the carriage system according to the invention with two cable raceways connected.

### Description of the invention

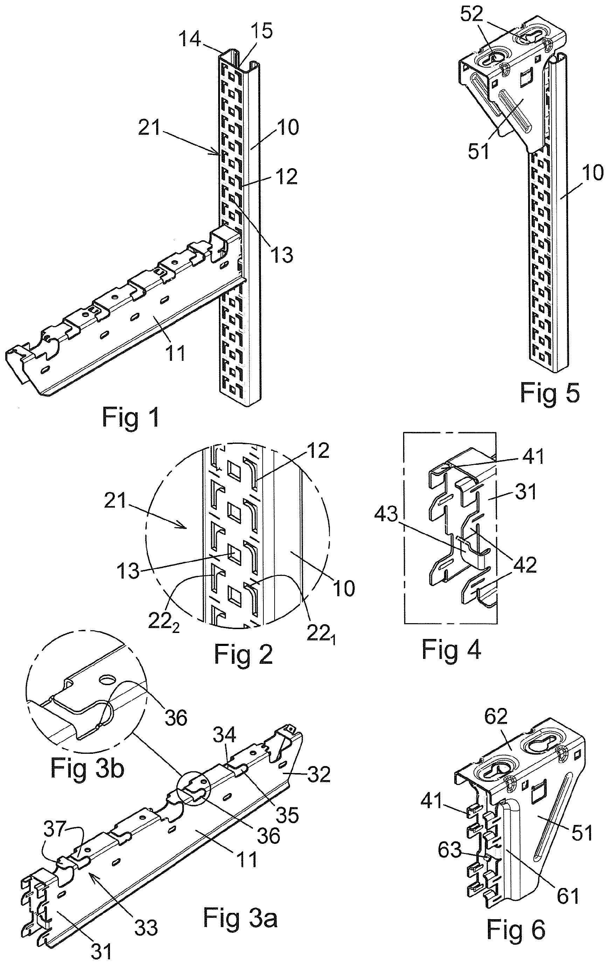

Figure 1 illustrates a first vertical object (10) in the form of a pivot runner/anchor runner to which the first horizontal object is connected (11) in the form of a bracket. The pivot runner/anchor runner is designed in cross-sections in a C profile (14) and at its waist (15) is provided with a hole pattern (21) that is serially repeated along the entire runner. The hole pattern (21) is provided with a runner with a longitudinally oriented slot (12) and a locking device (13) as a square hole that passes through. The end of the bracket is provided with projections that fit into the slot into which the bracket has been inserted, and then in a translational manner are dislocated in the longitudinal direction of the runner, whereby a locking tab in the bracket snaps into the hole and locks the bracket from further movement.

Figure 2 illustrates a magnified image of the hole pattern (21) of the runner (10), which in the example presented is designed with slots (12), which are L-shaped and in pairs (22₁), (22₂), arranged on each side of the square hole (13) in a symmetrical configuration. The serial pattern of the hole pattern consists of a pair of repeated L-shaped slots and a locking device arranged symmetrically around the centreline of the runner.

Figure 3a illustrates the bracket (11) with one end inside (31) and a second end outside (32) and, which in the example presented is provided with angular recesses (33) on its topside and consists of a vertical insertion column (34) and a horizontal dislocation column (35). Each recess (33) forms horizontally oriented side wings (37) under which a cable tray can be pushed.

Figure 3b illustrates that at least one of the angular recesses on the dislocation column is provided with a lock protrusion (36), which causes a snap fastening of the lock projection over an inserted cable tray.

Figure 4 shows one end (31) of the different hook-shaped projections (41), (42) on the bracket for attachment to the described hole pattern. A first pair of projections (41) is hook-shaped at the level of the side surface of the bracket, which is also bent to a hook shape perpendicular to the side surface of the bracket in order to be formed into an L shape. A second pair and a third pair of projections (42) are only hook-shaped at the side surface level of the bracket. The distances between each pair of hook-shaped projections correspond to the divisions between the serial hole pattern in order to be able to be introduced into these. For example, as shown in the figure, the bracket can be inserted into three hole patterns, of which two hole patterns are adjacent to each other, while the third is in line with an intermediate hole pattern, i.e. in the hole patterns 1-2-4. In addition, the end of the bracket is equipped with a spring lock tab (43) that snaps into and locks the bracket against the first vertical object.

Figure 5 shows the first vertical object (10) as shown in Figure 1 in the form of a pivot runner/anchor runner to which a second vertical object (51) is connected in the form of a ceiling bracket. This ceiling bracket is screwed into the ceiling by using the keyhole-shaped holes (52) in the ceiling bracket. After the ceiling bracket is in place, the pivot runner (10) is hooked into the ceiling bracket and pushed down so as to snap securely in an equivalent manner as has been described. In this embodiment, the ceiling bracket and its projection will be put under a vertical loading through the suspension of the pivot runner in the bracket and additional parts being connected to the pivot runner to support cable ladders, cable raceways and cable trays.

Figure 6 shows the vertical object/ceiling bracket (51) with its side (61), its upper end (62) and the L-shaped projections (41) extending from the side (61). As shown in Figure 6, the ceiling bracket exhibits four pairs of protrusions, which are L-shaped to fit the described hole patterns in the pivot runner. In this embodiment, the projections will be fitted in the hole pattern 1-2-4-5. Between the middle pair of projections, the ceiling bracket is provided with a spring lock tab (63), which will lock the pivot runner to the ceiling bracket after fitting the pairs of projections into the hole patterns and downward dislocation of the runner by snapping into a locking device. The fact that the ceiling bracket is called a vertical object is to increase the vertical extension of the runner and so that the ceiling bracket projections extend in a sideways direction.

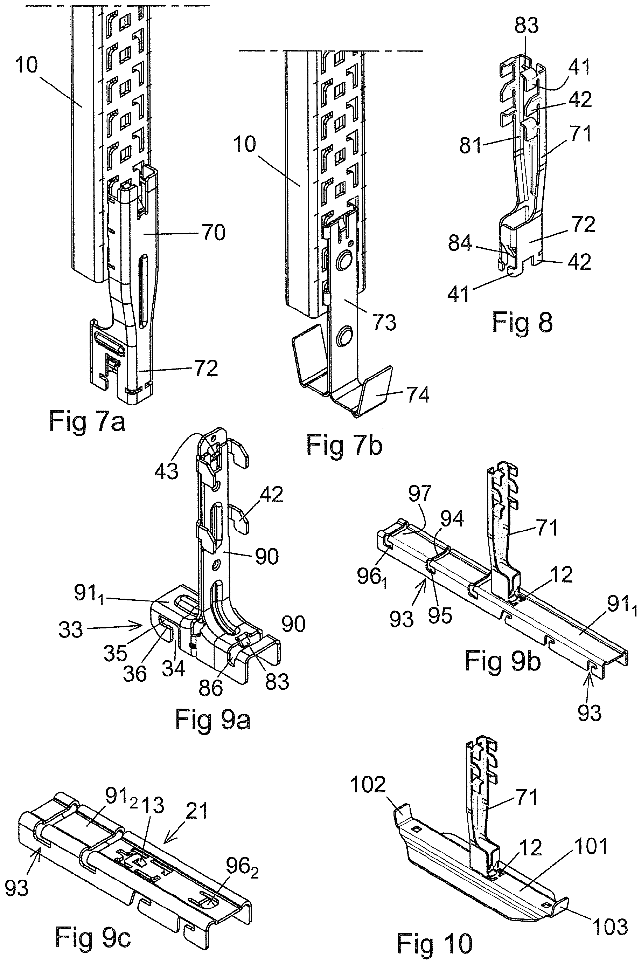

Figure 7a shows the first vertical object (10) as shown in Figure 1 in the form of a pivot runner/anchor runner to which a second vertical object (70) has been attached in the form of an adapter, which represents an adaptation of one connection of a horizontal object to the end of the pivot runner/anchor runner. In a manner equivalent to that of the ceiling bracket, the adapter is provided with projections oriented in a lateral direction at its upper end, for fitting into the runner, but at its lower end (72) it is provided with longitudinal projections directed by the adapter.

Figure 7b shows the first vertical object (10) as shown in Figure 1 in the form of a pivot runner/anchor runner to which an alternative, second vertical object (73) is provided with a laterally oriented projection at its upper end for fitting into the runner, but is designed with carriage hooks (74) at its lower end.

Figure 8 shows an alternative second vertical object (71) with its lower end (72) provided with projections (41), (42) in a longitudinal orientation of the object. The side (81) of the object is provided at the upper end with corresponding projections (41), (42) oriented laterally outward from the object. For locking the object to a runner, the upper end of the vertical object (71) is provided with a spring lock tab (83). In an equivalent manner, the lower end of the vertical object is provided with a corresponding spring lock tab (84). The locking tabs (83), (84) are arranged to interact with said locking device to a locking of the movement of the vertical object (71) in relation to the connected objects.

Figure 9a shows a first design of a second horizontal object (91₁), which is provided with a vertical section (90) with projection (42), which fits into a hole pattern as previously shown, so as to be connected to and locked against the first vertical object and snaps securely into this through a spring lock tab (43) in the vertical section (90). The second horizontal object is provided with an angular recess (33) consisting of a vertical insertion column (34) and a horizontal dislocation column (35). In an equivalent manner as shown in Figure 3b, the horizontal dislocation column (35) is provided with a lock projection (36), which causes a snap attachment in a horizontal direction of a lock projection over the inserted cable tray. In addition, the horizontal object is equipped with a vertical column (86) in which a spring lock tab (83) locks into one of the cable trays in a vertical direction in the vertical column (86).

Figure 9b shows a second design of the second horizontal object (91₁) connected to the end of the second vertical object (71). The objects have been fitted to each other and a dislocation has been made in the slot (12) after a snap locking has occurred between the object. The horizontal object (91₁) is fitted with an angular recess (93), each provided with a vertical insertion column (94) connected to a horizontal dislocation column (95), of which at least one dislocation column (95) is provided with a lock projection (96₁) over which a cable tray is snapped upon insertion into the angular recesses (93). In addition, the angular recesses are essentially horizontally oriented side wings (97) in order to connect and secure a cable tray. The figure also shows that the embodiment of the horizontal object is provided with six angular recesses, of which three are on one side if the vertical object is facing towards the access from the top, and of which the three on the other side of the vertical object are facing the access from the underside. In this way, a cable tray can be easily suspended on one side of the horizontal object and then tilted and shifted to the locked position. This means that only one assembler can quickly assemble the entire cable tray.

Figure 9c shows an alternative design of the second horizontal object (91₂), which in this example presents the embodiment with four angular recesses, of which two are on one side if a connected vertical object is facing the access from the topside, and of which there are two on the other side if a connected vertical object is facing the access from the underside. For connection of the second horizontal object (91₂) to a second vertical object, the hole pattern (21) is embodied in an equivalent manner but the locking between the objects with dislocation occurs through locking device (13) being designed as a folded-up lock tab over which part of the vertical object is dislocated for locking. To secure an inserted cable tray, a dislocation of this takes place past a folded down lock tab (96₂) and is subsequently locked to the horizontal object.

As shown in the figures, the number of angular recesses varies on each side of a vertical object but is preferably an equal number on both sides. On one side, all angular recesses face downwards, and on the other side, all of the angular recesses face upwards.

Figure 10 shows an additional alternative second horizontal object (101), which is connected to the second vertical object (71) in the manner already described, i.e., through fitting into a hole pattern and a dislocation into a slot (12). This variant of the second horizontal object (101) is provided at both ends thereof with essentially vertically oriented side wings (102), (103) for connecting a cable ladder. The cable ladder is designed with an open side profile so that the side wings can be connected and carry the cable ladder.

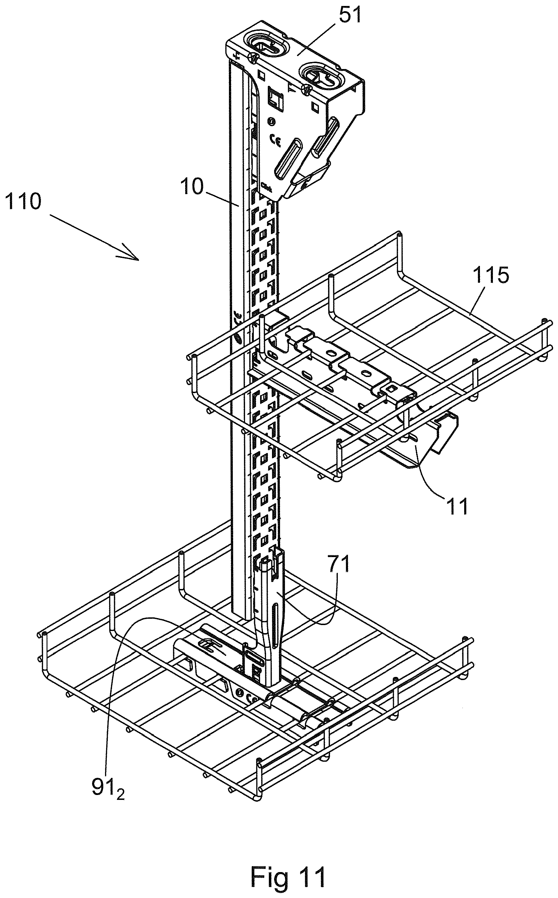

Figure 11 shows a first embodiment of a carriage system (110) according to the invention where a roof anchor (51) has been connected to a pivot rail (10) which has been fitted with a console (11) to which a wire ladder (115) has been connected. Furthermore, an adapter (71) has been connected to the lower end of the pivot runner (10) and to which a yoke (91₂) for a second cable tray has been has been connected to adapter (71). Thus, the carriage system (110) is presented with a mounting of two cable trays.

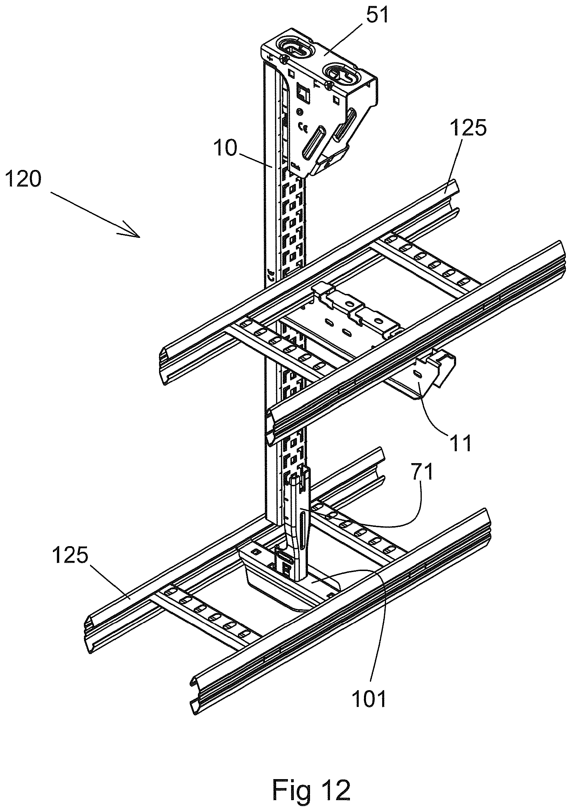

Figure 12 shows a second embodiment of a carriage system (120) according to the invention, in which a ceiling bracket (51) has been connected to a pivot runner (10), which has been provided with a bracket (11) to which a cable ladder (125) has been connected. In addition, an adapter (71) has been connected to the lower end of the pivot runner (10) and to which a carrier (101) for a second cable ladder has been connected to adapter (71). Thus, the carriage system (120) is presented with a mounting of two cable ladders (125). The lower cable ladder has been snapped into the yoke (101) from underneath over the side wings that are shown on the yoke/horizontal object in Figure 10.
As shown in the figure, the cable ladders are of the so-called hexagonal type with perforated, flat ladder steps.

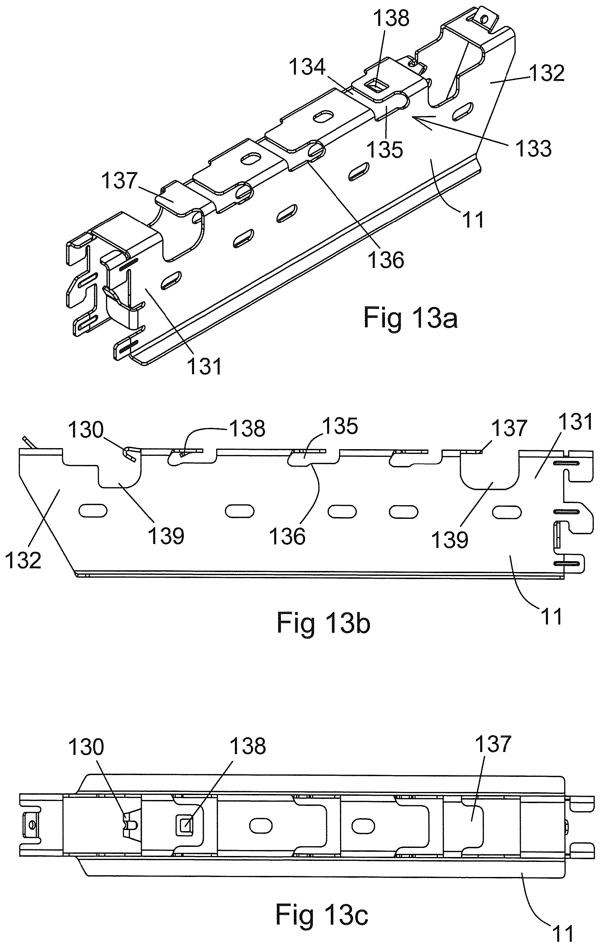

Figure 13a shows an alternative embodiment of a bracket (11) with one inner end (131) and a second external end (132). This design is also provided on its upper side with angular recesses (133) consisting of a vertical insertion column (134) and a horizontal dislocation column (135). Each recess (133) forms horizontally oriented side wings (137) under which a cable tray can be passed. In addition, there is at least one side wing provided with a cut-out in towards the dislocation column (135) of a spring lock tab (138), which snaps over a wire section in a cable tray inserted into the dislocation column. As can also be seen in the figure, at least one of the angular recess dislocation columns is provided with a lock projection (136), which will also contribute to a snap attachment of one of the locking projections over the inserted cable tray.

Figure 13b shows the bracket (11) from the side. On its top side at one end (131), the bracket (11) is provided with an essentially horizontally oriented side wing (137) and on the top side of the other end (132) is provided with a flexible tab (130). At each end, the bracket (11) is provided with vertically oriented profile depressions (139) in which a side profile of a cable ladder can be mounted from above and connected to the bracket through a snap mechanism over the flexible tab (130).

The figure also shows the lock projection (136) of the bracket (11) and the spring lock tab (138) that contributes to connecting a cable tray to the bracket through the snap mechanism. The horizontal orientation of the side wing (137) on the bracket acts as a gripper for both the bracket connected to the cable ladder and, alternatively, for one connected to the cable tray. Furthermore, the top side of the bracket is flat to support a cable raceway.

Figure 13c shows the bracket (11) from above with the flexible tab (130) and the spring lock tab (138), where both tabs contribute to the snap mechanism for securing either a cable ladder or a cable tray to the bracket. Both a cable ladder and a cable tray can be snapped over the horizontal side wing (137).

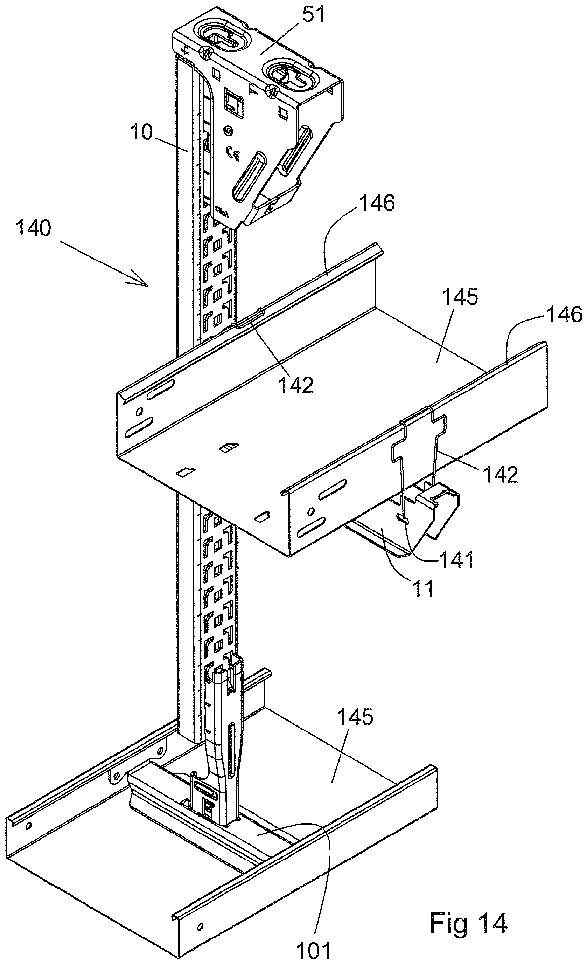

Figure 14 shows a third embodiment of a carriage system (140) with a bracket (11) connected to a pivot runner/anchor runner (10) that may be attached to a ceiling using a ceiling anchor (51). The bracket (11) is flat on the top side and provided with the side holes (141) on both sides of the bracket, to which side hole filiform snap studs (142) are connected to connect a cable raceway (145) through a snap mechanism over the side edges (146) on the cable raceway (145). Thus, two snap studs are connected to each bracket to cover both side edges of the cable raceway. The figure also shows that a cable raceway (145) can be snapped into a yoke (101) designed to fit a cable raceway.

To one and the same second horizontal object (11) as shown in the bracket presented in figures 13a, 13b, and 13c, it is therefore possible to connect three different cable carrying organs, namely a cable raceway that is connected by a snap stud, a cable tray that through a snap mechanism is connected to the angular recesses of the bracket, as well as through a snap mechanism, connected to the bracket through its profile depressions.

Naturally, other types of brackets and yokes can be designed and connected to achieve other embodiments of carriage systems within the framework of the object coupling design of the invention. Wall brackets, ceiling brackets with corresponding object coupling designs can also be included in a carriage system according to the invention. Also, carriage systems with combinations of parts as described above are included under the invention.

## Claims

1. Carriage system for cable ladders, cable raceways or cable trays including a first vertical object (10), in the form of a pivot runner/anchor runner, and a first horizontal object (11), in the form of a bracket wherein
said first vertical object (10) is provided with a hole pattern (21) including at least one slot (12) and a locking device (13), said hole pattern (21) being serially repeated along the entire runner, and wherein said first horizontal object (11) is at its one end (31) provided with at least one hook-shaped projection (41, 42), which in a first position is insertable into said at least one slot (12) and the first horizontal object (11) can be dislocated in a translational manner in a longitudinal direction of the runner (10) to a lock position, and said first horizontal object (11) is provided with a spring lock tab (43, 62, 83, 84) designed to snap/click into/over said locking device (13) in the first vertical object (10) in lock position, wherein the at least one slot (12) of the hole pattern (21) is longitudinally oriented and the locking device (13) is a square hole that passes through, and wherein the longitudinally oriented at least one slot (12) is made of a pair of slots (22₁, 22₂) which are L-shaped and each slot (22₁, 22₂) of the pair is arranged on each side of the square hole (13) in a symmetrical configuration, and the serial pattern of the hole pattern (21) consists of a repetition of one pair of L-shaped slots (22₁,22₂) and one locking device (13) arranged symmetrically around the centreline of the runner (10),
and wherein the at least one hook-shaped projection (41, 42) comprises a first pair of projections (41), which are hook-shaped at the level of a side surface of the bracket, and which are also bent to a hook shape perpendicular to said side surface of the bracket in order to be formed into an L shape.

2. The carriage system according to claim 1, **characterised by** further comprising a second vertical object (51, 71) at its one end (72) or at its side (61, 81) provided with said at least one hook-shaped projection (41, 42), which is insertable into the slots (12), said second vertical object (51, 71) further provided with a spring lock tab (63, 83, 84) designed to snap/click into/over said locking devices (13) in the first vertical object (10).

3. The carriage system according to claim 2 further comprising a second horizontal object (91₁, 91₂, 101), for example, in the form of a yoke, said second horizontal object (91₁,91₂, 101) comprising the hole pattern (21) including said slots (12).

4. The carriage system according to claim 3, **characterised by** the fact that said second vertical object (71) is provided at its end (72) with an additional corresponding hook-shaped projection (41, 42), which in a first position is inserted into a corresponding hole pattern (21) slot (12) in the second horizontal object (91₁, 91₂, 101), and that said second vertical object (71) is provided with a spring lock tab (84) designed to snap/click into/over a corresponding locking device (13) in the second horizontal object (91₁, 91₂, 101) in lock position.

5. The carriage system according to claim 4, **wherein,** said second vertical object (51, 71) comprises a spring lock tab (63, 84) configured to snap/click into/over said locking device (13) in the second horizontal object (91₁, 91₂, 101) in lock position.

6. The carriage system according to any of claims 4 to 5,
**characterised by** the fact that said second horizontal object (91₁, 91₂, 101) consists of a yoke for a cable ladder, cable raceway or cable tray.

7. The carriage system according to any of claims 4 to 6,
**characterised by** the fact that the hole pattern (21) of the second horizontal object (91₁, 91₂, 101) is located in the centre between both of its ends.

8. The carriage system according to any of claims 4 to 7
**characterised by** the fact that the angle between the first or second vertical object (10, 51, 71) and the first or second horizontal object (11, 91₁, 91₂, 101) is 90°.

9. The carriage system according to any of claims 4 to 8,
**characterised by** the fact that said first or second horizontal object (11, 91₁, 91₂, 101) is provided with at least one angular recess (33, 93, 133) provided with a vertical insertion column (34, 94, 134) for connection to a horizontal dislocation column (35, 95, 135), wherein the horizontal dislocation column (35, 95, 135) is provided with a lock projection (36, 96₁, 96₂, 136) and/or with a spring lock tab (138) that is snapped over sections of a cable tray with the insertion of the cable tray into the angular recesses (33, 93, 133).

10. The carriage system according to claim 9,
**characterised by** the fact that said first or second horizontal object (11, 91₁, 91₂, 101) is provided with a vertically oriented lock slot (86) or profile depression (139) into which a lock tab (83, 130) is positioned so that the cable tray locks securely into the lock slot and/or a cable ladder locks securely into the profile depression through a snap mechanism.

11. The carriage system according to claims 9 or 10,
**characterised by** the fact that said second horizontal object (91₁, 91₂) is provided with multiple angular recesses (93), of which at least one has a vertical insertion column (94) on the top side of the second horizontal object (91₁, 91₂), and at least one has a vertical insertion column (94) on the underside of the second horizontal object (91₁, 91₂).

12. The carriage system according to any of claims 4 to 11, **characterised by** the fact that said second horizontal object (101) is provided with vertically oriented side wings (102, 103), which are springy and facing outwards in a resting position in order to render the connection of a cable ladder (125) possible from the bottom of the second horizontal object (101) through a snap mechanism.

13. The carriage system according to any of claims 1 to 12, **characterised by** the fact that said first horizontal object (11) is provided with an horizontally oriented side wing (37, 137) at the end of its top side (131), and on the top side of the other end (132) it is provided with a flexible tab (130) in order for the first horizontal object (11) to connect a cable ladder (125) from above through a snap mechanism.

14. The carriage system according to any of claims 4 to 13
**characterised by** the fact that said first or second horizontal object (11, 91₁, 91₂) is provided with side holes (141) to which filiform snap studs (142) are connected in order to connect a cable raceway (145) through a snap mechanism over the side edge of the cable raceway (145).

## Patentansprüche

1. Trägersystem für Kabelpritschen, Kabelkanäle oder Kabelrinnen, umfassend ein erstes vertikales Objekt (10) in der Form einer Schwenkschiene/Ankerschiene und ein erstes horizontales Objekt (11) in der Form eines Auslegers, wobei das erste vertikale Objekt (10) mit einem Lochmuster (21) versehen ist, das mindestens einen Schlitz (12) und eine Verriegelungsvorrichtung (13) umfasst, wobei das Lochmuster (21) entlang der gesamten Schiene fortlaufend wiederholt ist, und wobei das erste horizontale Objekt (11) an seinem einen Ende (31) mit mindestens einem hakenförmigen Vorsprung (41, 42) versehen ist, der in einer erste Position in den mindestens einen Schlitz (12) einsetzbar ist, und wobei das erste horizontale Objekt (11) in einer translatorischen Weise in einer Längsrichtung der Schiene (10) zu einer Verriegelungsposition verschoben werden kann, und wobei das erste horizontale Objekt (11) mit einer Federverriegelungslasche (43, 62, 83, 84) versehen ist, die dazu ausgestaltet ist, in/über der Verriegelungsvorrichtung (13) in dem ersten vertikalen Objekt (10) in einer Verriegelungsposition einzuschnappen/einzurasten, wobei der mindestens eine Schlitz (12) des Lochmusters (21) in Längsrichtung ausgerichtet ist, und wobei die Verriegelungsvorrichtung (13) ein quadratisches Loch ist, das hindurch verläuft, und wobei der in Längsrichtung ausgerichtete mindestens eine Schlitz (12) aus einem Paar von Schlitzen (22₁, 22₂) besteht, die L-förmig sind, und wobei jeder Schlitz (22₁, 22₂) des Paars auf jeder Seite des quadratischen Lochs (13) in einer symmetrischen Auslegung angeordnet ist, und wobei das fortlaufende Muster des Lochmusters (21) aus einer Wiederholung eines Paars von L-förmigen Schlitzen (22₁, 22₂) und einer Verriegelungsvorrichtung (13) besteht, die symmetrisch um die Mittellinie der Schiene (10) angeordnet ist, und wobei der mindestens eine hakenförmige Vorsprung (41, 42) ein erstes Paar von Vorsprüngen (41) umfasst, die auf der Höhe einer Seitenfläche des Auslegers hakenförmig sind, und die auch senkrecht zu der Seitenfläche des Auslegers zu einer Hakenform gebogen sind, um in eine L-Form ausgebildet zu sein.

2. Trägersystem nach Anspruch 1, **dadurch gekennzeichnet, dass** es ferner ein zweites vertikales Objekt (51, 71) an seinem einen Ende (72) oder an seiner Seite (61, 81) umfasst, das mit dem mindestens einen hakenförmigen Vorsprung (41, 42) versehen ist, der in die Schlitze (12) einsetzbar ist, wobei das zweite vertikale Objekt (51, 71) ferner mit einer Federverriegelungslasche (63, 83, 84) versehen ist, die dazu ausgestaltet ist, in/über den Verriegelungsvorrichtungen (13) in dem ersten vertikalen Objekt (10) einzuschnappen/einzurasten.

3. Trägersystem nach Anspruch 2, ferner umfassend ein zweites horizontales Objekt (91₁, 91₂, 101), zum Beispiel in der Form eines Jochs, wobei das zweite horizontale Objekt (91₁, 91₂, 101) das Lochmuster (21) umfasst, das die Schlitze (12) umfasst.

4. Trägersystem nach Anspruch 3, **gekennzeichnet durch** die Tatsache, dass das zweite vertikale Objekt (71) an seinem Ende (72) mit einem zusätzlichen korrespondierenden hakenförmigen Vorsprung (41, 42) versehen ist, der in einer ersten Position in einen korrespondierenden Schlitz (12) des Lochmusters (21) in dem zweiten horizontalen Objekt (91₁, 91₂, 101) eingesetzt ist, und dass das zweite vertikale Objekt (71) mit einer Federverriegelungslasche (84) versehen ist, die dazu ausgestaltet ist, in/über einer korrespondierenden Verriegelungsvorrichtung (13) in dem zweiten horizontalen Objekt (91₁, 91₂, 101) in einer Verriegelungsposition einzuschnappen/einzurasten.

5. Trägersystem nach Anspruch 4, **wobei** das zweite vertikale Objekt (51, 71) eine Federverriegelungslasche (63, 84) umfasst, die dazu ausgelegt ist, in/über der Verriegelungsvorrichtung (13) in dem zweiten horizontalen Objekt (91₁, 91₂, 101) in einer Verriegelungsposition einzuschnappen/einzurasten.

6. Trägersystem nach einem der Ansprüche 4 bis 5, **gekennzeichnet durch** die Tatsache, dass das zweite horizontale Objekt (91₁, 91₂, 101) aus einem Joch für eine Kabelpritsche, einen Kabelkanal oder eine Kabelrinne besteht.

7. Trägersystem nach einem der Ansprüche 4 bis 6, **gekennzeichnet durch** die Tatsache, dass das Lochmuster (21) des zweiten horizontalen Objekts (91₁, 91₂, 101) in der Mitte zwischen beiden seiner Enden angeordnet ist.

8. Trägersystem nach einem der Ansprüche 4 bis 7, **gekennzeichnet durch** die Tatsache, dass der Winkel zwischen dem ersten oder zweiten vertikalen Objekt (10, 51, 71) und dem ersten oder zweiten horizontalen Objekt (11, 91₁, 91₂, 101) 90° beträgt.

9. Trägersystem nach einem der Ansprüche 4 bis 8, **gekennzeichnet durch** die Tatsache, dass das erste oder zweite horizontale Objekt (11, 91₁, 91₂, 101) mit mindestens einer abgewinkelten Aussparung (33, 93, 133) versehen ist, die mit einer vertikalen Einsetzspalte (34, 94, 134) zur Verbindung mit einer horizontalen Verschiebespalte (35, 95, 135) versehen ist, wobei die horizontale Verschiebespalte (35, 95, 135) mit einem Verriegelungsschutz (36, 96₁, 96₂, 136) und/oder mit einer Federverriegelungslasche (138) versehen ist, die über Abschnitten einer Kabelrinne mit dem Einsetzen der Kabelrinne in die abgewinkelten Aussparungen (33, 93, 133) eingeschnappt wird.

10. Trägersystem nach Anspruch 9, **gekennzeichnet durch** die Tatsache, dass das erste oder zweite horizontale Objekt (11, 91₁, 91₂, 101) mit einem bzw. einer vertikal ausgerichteten Verriegelungsschlitz (86) oder Profilvertiefung (139) versehen ist, in den bzw. die eine Verriegelungslasche (83, 130) positioniert wird, so dass die Kabelrinne sicher in den Verriegelungsschlitz verriegelt und/oder eine Kabelpritsche sicher in die Profilvertiefung über einen Schnappmechanismus verriegelt.

11. Trägersystem nach Anspruch 9 oder 10, **gekennzeichnet durch** die Tatsache, dass das zweite horizontale Objekt (91₁, 91₂) mit mehreren abgewinkelten Aussparungen (93) versehen ist, von denen mindestens eine eine vertikale Einsetzspalte (94) an der Oberseite des zweiten horizontalen Objekts (91₁, 91₂) aufweist, und mindestens eine eine vertikale Einsetzspalte (94) an der Unterseite des zweiten horizontalen Objekts (91₁, 91₂) aufweist.

12. Trägersystem nach einem der Ansprüche 4 bis 11, **gekennzeichnet durch** die Tatsache, dass das zweite horizontale Objekt (101) mit vertikal ausgerichteten Seitenflügeln (102, 103) versehen ist, die federnd sind und in einer Ruheposition nach außen weisen, um die Verbindung einer Kabelpritsche (125) von der Unterseite des zweiten horizontalen Objekts (101) durch einen Schnappmechanismus zu ermöglichen.

13. Trägersystem nach einem der Ansprüche 1 bis 12, **gekennzeichnet durch** die Tatsache, das erste horizontale Objekt (11) an dem Ende seiner Oberseite (131) mit einem horizontal ausgerichteten Seitenflügel (37, 137) versehen ist, und an der Oberseite des anderen Endes (132) mit einer flexiblen Lasche (130) versehen ist, damit das erste horizontale Objekt (11) eine Kabelpritsche (125) von oben durch einen Schnappmechanismus verbindet.

14. Trägersystem nach einem der Ansprüche 4 bis 13, **gekennzeichnet durch** die Tatsache, dass das erste oder zweite horizontale Objekt (11, 91₁, 91₂) mit Seitenlöchern (141) versehen ist, mit denen filiforme Schnappstifte (142) verbunden sind, um einen Kabelkanal (145) durch einen Schnappmechanismus über der Seitenkante des Kabelkanals (145) zu verbinden.

## Revendications

1. Système de support pour échelles à câbles, goulottes à câbles ou chemins de câbles comprenant un premier objet vertical (10), sous la forme d'une glissière de pivotement/glissière d'ancrage, et un premier objet horizontal (11), sous la forme d'une console, ledit premier objet vertical (10) étant pourvu d'un motif de perforations (21) comprenant au moins une fente (12) et un dispositif de mise en prise (13), ledit motif de perforations (21) étant reproduit de façon répétée le long de la glissière entière, et ledit premier objet horizontal (11) étant pourvu à une extrémité (31) de celui-ci d'au moins une saillie en forme de crochet (41, 42) qui, dans une première position, peut être insérée dans ladite au moins une fente (12), et le premier objet horizontal (11) pouvant être déplacé par translation dans une direction longitudinale de la glissière (10) jusqu'à une position de mise en prise, et ledit premier objet horizontal (11) étant pourvu d'une languette de mise en prise élastique (43, 62, 83, 84) conçue pour s'emboîter de manière élastique/s'accrocher dans/sur ledit dispositif de mise en prise (13) dans le premier objet vertical (10) dans la position de mise en prise, l'au moins une fente (12) du motif de perforations (21) étant orientée longitudinalement et le dispositif de mise en prise (13) étant une perforation carrée traversante, et l'au moins une fente (12) orientée longitudinalement étant constituée d'une paire de fentes (22₁, 22₂) qui sont en forme de L et chaque fente (22₁, 22₂) de la paire étant située sur un côté respectif de la perforation carrée (13) en une configuration symétrique, et le motif répété du motif de perforations (21) consistant en une répétition d'une paire de fentes (22₁, 22₂) en forme de L et d'un dispositif de mise en prise (13) agencés symétriquement autour de la ligne médiane de la glissière (10), et l'au moins une saillie en forme de crochet (41, 42) comprenant une première paire de saillies (41), qui sont en forme de crochet au niveau d'une surface latérale de la console, et qui sont également courbées en une forme de crochet perpendiculaire à ladite surface latérale de la console de façon à avoir une forme en L.

2. Système de support selon la revendication 1, **caractérisé en ce qu'**il comprend, en outre, un deuxième objet vertical (51, 71) pourvu, à une extrémité (72) de celui-ci ou sur un côté (61, 81) de celui-ci, de ladite au moins une saillie en forme de crochet (41, 42), qui peut être insérée dans les fentes (12), ledit deuxième objet vertical (51, 71) étant pourvu, en outre, d'une languette de mise en prise élastique (63, 83, 84) conçue pour s'emboîter de manière élastique/s'accrocher dans/sur lesdits dispositifs de mise en prise (13) dans le premier objet vertical (10).

3. Système de support selon la revendication 2, comprenant, en outre, un deuxième objet horizontal (91₁, 91₂, 101), par exemple sous la forme d'un palonnier, ledit deuxième objet horizontal (91₁, 91₂, 101) comprenant le motif de perforations (21) comprenant lesdites fentes (12) .

4. Système de support selon la revendication 3, **caractérisé par le fait que** ledit deuxième objet vertical (71) est pourvu à une extrémité (72) de celui-ci d'une saillie en forme de crochet (41, 42) correspondante supplémentaire qui, dans une première position, est insérée dans une fente (12) correspondante du motif de perforations (21) dans le deuxième objet horizontal (91₁, 91₂, 101), et que ledit deuxième objet vertical (71) est pourvu d'une languette de mise en prise élastique (84) conçue pour s'emboîter de manière élastique/s'accrocher dans/sur un dispositif de mise en prise (13) correspondant dans le deuxième objet horizontal (91₁, 91₂, 101) dans la position de mise en prise.

5. Système de support selon la revendication 4, **dans lequel** ledit deuxième objet vertical (51, 71) comprend une languette de mise en prise élastique (63, 84) conçue pour s'emboîter de manière élastique/s'accrocher dans/sur ledit dispositif de mise en prise (13) dans le deuxième objet horizontal (91₁, 91₂, 101) dans la position de mise en prise.

6. Système de support selon l'une quelconque des revendications 4 et 5, **caractérisé par le fait que** ledit deuxième objet horizontal (91₁, 91₂, 101) consiste en un palonnier par une échelle à câbles, une goulotte à câbles ou un chemin de câbles.

7. Système de support selon l'une quelconque des revendications 4 à 6, **caractérisé par le fait que** le motif de perforations (21) du deuxième objet horizontal (91₁, 91₂, 101) est situé au centre entre ses deux extrémités.

8. Système de support selon l'une quelconque des revendications 4 à 7, **caractérisé par le fait que** l'angle entre le premier ou deuxième objet vertical (10, 51, 71) et le premier ou deuxième objet horizontal (11, 91₁, 91₂, 101) est de 90°.

9. Système de support selon l'une quelconque des revendications 4 à 8, **caractérisé par le fait que** ledit premier ou deuxième objet horizontal (11, 91₁, 91₂, 101) est pourvu d'au moins une encoche angulaire (33, 93, 133) pourvue d'une colonne d'insertion verticale (34, 94, 134) destinée à être raccordée à une colonne de déplacement horizontale (35, 95, 135), la colonne de déplacement horizontale (35, 95, 135) étant pourvue d'une saillie de mise en prise (36, 96₁, 96₂, 136) et/ou d'une languette de mise en prise élastique (138) qui est emboîtée de manière élastique sur des sections d'un chemin de câbles avec l'insertion du chemin de câbles dans les encoches angulaires (33, 93, 133).

10. Système de support selon la revendication 9, **caractérisé par le fait que** ledit premier ou deuxième objet horizontal (11, 91₁, 91₂, 101) est pourvu d'une fente de mise en prise (86) ou une échancrure profilée (139) orientée verticalement dans laquelle est placée une languette de mise en prise (83, 130) de telle sorte que le chemin de câbles se met solidement en prise dans la fente de mise en prise et/ou une échelle à câbles se met solidement en prise dans l'échancrure profilée par un mécanisme d'emboîtement élastique.

11. Système de support selon la revendication 9 ou 10, **caractérisé par le fait que** ledit deuxième objet horizontal (91₁, 91₂) est pourvu d'une pluralité d'encoches angulaires (93), dont au moins une comporte une colonne d'insertion verticale (94) sur le côté supérieur du deuxième objet horizontal (91₁, 91₂), et au moins une comporte une colonne d'insertion verticale (94) sur le côté inférieur du deuxième objet horizontal (91₁, 91₂) .

12. Système de support selon l'une quelconque des revendications 4 à 11, **caractérisé par le fait que** ledit deuxième objet horizontal (101) est pourvu d'ailettes latérales (102, 103) orientées verticalement, qui sont élastiques et orientées vers l'extérieur dans une position de repos afin de permettre le raccordement d'une échelle à câbles (125) par le dessous du deuxième objet horizontal (101) par un mécanisme d'emboîtement élastique.

13. Système de support selon l'une quelconque des revendications 1 à 12, **caractérisé par le fait que** ledit premier objet horizontal (11) est pourvu d'une ailette latérale (37, 137) orientée horizontalement à l'extrémité de son côté supérieur (131), et sur le côté supérieur de l'autre extrémité (132) il est pourvu d'une languette flexible (130) pour le raccordement du premier objet horizontal (11) à une échelle à câbles (125) par le dessus par un mécanisme d'emboîtement élastique.

14. Système de support selon l'une quelconque des revendications 4 à 13, **caractérisé par le fait que** ledit premier ou deuxième objet horizontal (11, 91₁, 91₂) est pourvu de perforations latérales (141) auxquelles sont raccordées des pattes d'emboîtement élastique filiformes (142) pour le raccordement d'une goulotte à câbles (145) par un mécanisme d'emboîtement élastique sur le bord latéral de la goulotte à câbles (145).
